# EUROPEAN PATENT APPLICATION

(11) **EP 3 725 711 A1**
(43) Date of publication of application: **21.10.2020**
(21) Application number: 20165480.3
(22) Date of filing: 25.03.2020
(51) Int. Cl.: B65G 57/14, B65G 21/20, B65H 29/36

(54) **UNLOADING ROLLER CONVEYOR**

(30) Priority: 19.04.2019 IT 201900006164
(71) Applicant: Dallan S.p.A., 31033 Castelfranco Veneto (Treviso) (IT)
(72) Inventor: DALLAN, Andrea, I-31033 Castelfranco Veneto, TREVISO (IT); SIMEONI, Ivan, I-31033 Castelfranco Veneto, TREVISO (IT)
(74) Representative: Zanettin, Gianluigi

(57) **Abstract**

The present invention relates to an unloading roller conveyor (1) for receiving incoming processed pieces (P) and to unload them onto a collection table (100) placed below it. The conveyor (1) comprises:
-a support structure (2);
- at least one first series of rollers (10), which have axes of rotation (Y-Y) that are parallel to one another and transverse to the longitudinal direction (X) of the conveyor and can define a sliding and positioning plane (m) of the pieces inside said conveyor (1).
The plane (m) is arranged above a zone (90) for collecting the pieces that is arranged below said conveyor (1). Said at least one first series of rollers (10) is movable with respect to said support structure (2) between:
- a piece supporting position, in which all said rollers (10) are arranged to form said sliding and positioning plane (m), and
- a piece unloading position, in which all said rollers (10) are arranged above said sliding and positioning plane (m) such that the pieces (P) previously supported on said plane (m) by said first series of rollers (10) may pass to said collection zone (90). During use, the transfer from said supporting position to said unloading position causes a progressive removal of the rollers (10) from beneath the pieces (P), which permits controlled deposition of the pieces (P) from said horizontal plane (m) onto the collection table (100) below.

## Description

### Field of application

The object of the present invention is an unloading roller conveyor.

In particular, the unloading roller conveyor according to the invention is intended to be arranged downstream of a plant or line for processing laminar material or profiles in order to allow for the collection of the pieces leaving said processing plant or line.

In particular, the unloading roller conveyor according to the invention can be arranged downstream of a plant for laser-cutting pieces from laminar materials.

The processed pieces can derive from processing any materials, in particular from laminar materials wound into a coil or in the form of individual sheets or bars, squares, etc.

### State of the art

In order to collect the processed pieces leaving a plant or line for processing laminar material or profiles, it is known to use an unloading roller conveyor, beneath which a table for collecting the pieces is positioned, the height of which can be adjusted with respect to the plane of rollers, for example by means of a pantograph system.

In order to allow the pieces to reach the collection table arranged beneath said conveyor, the plane defined by the rollers has to be open. The opening in this plane can be a hatch or a lateral opening.

For unloading roller conveyors comprising a hatch opening, the roller plane is divided into two parts that are hinged to the support structure of the conveyor in order to rotate in parallel with the central longitudinal axis of the conveyor in opposite directions. Each of these two parts bears, in an associated manner, a series of rollers, which allow the pieces to slide when the hatch is closed. The collection table always has to be kept at a minimum spacing from the roller plane in the closed position in order to keep a free space for the opening of said hatch. This represents an operational limitation for the above-mentioned unloading conveyor, since the pieces cannot be accompanied as they pass from the roller plane to the collection table, but are inevitably subjected to a free fall. The impact generated by falling onto the table can damage or ruin the processed pieces. In some cases, this may not be acceptable.

In the case of conveyors having a lateral opening, the roller plane is divided into two parts, which are associated with the support structure of the conveyor in order to slide orthogonally to the central longitudinal axis of the conveyor in opposite directions. Each of these two parts bears, in an associated manner, a series of rollers, which allow the pieces to slide when the two sliding parts move towards one another during closing.

With respect to the hatch unloading conveyor, the conveyor having a lateral opening makes it possible to reduce the minimum spacing between the roller plane and the collection table. However, this spacing cannot be completely eliminated, since the mobile structures to which the rollers are associated, by having to operate as a cantilever, have to have a minimum height in order to be able to support the processed pieces resting on them. The processed pieces are therefore still subjected to a free fall.

In order to completely avoid this problem, the unloading conveyor is replaced by a system composed of a robot manipulator that transfers the pieces from a fixed roller conveyor arranged downstream of the processing plant to a collection table arranged near the roller conveyor. This solution makes it possible to deposit the pieces onto the collection table in a controlled manner, thereby avoiding any free fall impact. However, this is a more complex and expensive technical solution.

Within the technical field in question, there is therefore the need to provide an unloading roller conveyor that makes it possible to transfer the pieces from the roller plane for receiving the pieces to a table for collecting the pieces in a controlled manner, without the need to use a robot manipulator.

### Presentation of the invention

Therefore, the main object of the present invention is to eliminate all or some of the drawbacks of the prior art cited above by providing an unloading roller conveyor that makes it possible to transfer the pieces from the roller plane for receiving the pieces to a table for collecting the pieces in a controlled manner, without the need to use a robot manipulator.

Another object of the present invention is to provide an unloading roller conveyor that is both simple and economic to produce.

Another object of the present invention is to provide an unloading roller conveyor that is simple to operate and easy to control.

### Brief description of the drawings

The technical features of the invention according to the above-mentioned objects are evident from the content of the claims given below and the advantages thereof will become clearer in the detailed description that follows, which makes reference to the attached drawings, that show one or more embodiments thereof purely by way of nonlimiting example, in which:
- Fig. 1 is a perspective front view from a first side of an unloading roller conveyor according to a preferred embodiment of the present invention;
- Fig. 2 is a perspective front view of the unloading roller conveyor in Fig. 1 from the side opposite the first side;
- Fig. 3 is a rear perspective view of the unloading conveyor shown in Fig. 1;
- Fig. 4 is a orthogonal front view of the unloading conveyor in Fig. 1 according to the arrow IV shown therein;
- Fig. 5 is an orthogonal sectional view of the conveyor in Fig. 1 according to a section plane passing through the central longitudinal axis X-X shown therein;
- Fig. 6 is an orthogonal sectional view of Fig. 1 according to the section plane VI-VI shown therein;
- Fig. 7 is an enlarged view of a detail of the conveyor in Fig. 6;
- Fig. 8 is an enlarged view of a detail of the conveyor in Fig. 1;
- Fig. 9 is a perspective sectional view of a portion of the conveyor in Fig. 1, with means for laterally guiding the pieces shown in a first operating position;
- Fig. 10 shows the same perspective view as Fig. 9 with the means for laterally guiding shown in a second operating position;
- Fig. 11 is an orthogonal view from above of the conveyor in Fig. 1 with some parts removed to better illustrate others;
- Fig. 12a-c are schematic views of the sequence of the operating steps for the function of the unloading roller conveyor shown in Fig. 1;
- Fig. 13a-c are schematic views of the sequence of the operating steps for the function of the unloading roller conveyor shown in Fig. 1, used as a traditional roller conveyor; and
- Fig. 14a-d are schematic views of the sequence of the operating steps for the function of an unloading roller conveyor according to an alternative embodiment of the invention.

### Detailed description

The unloading roller conveyor according to the invention will be indicated, as a whole, by 1 in the attached drawings.

Here and in the following description and claims, reference will be made to the conveyor 1 in the condition of use. Any references to a lower or upper position or to a horizontal or vertical orientation therefore have to be interpreted in this sense.

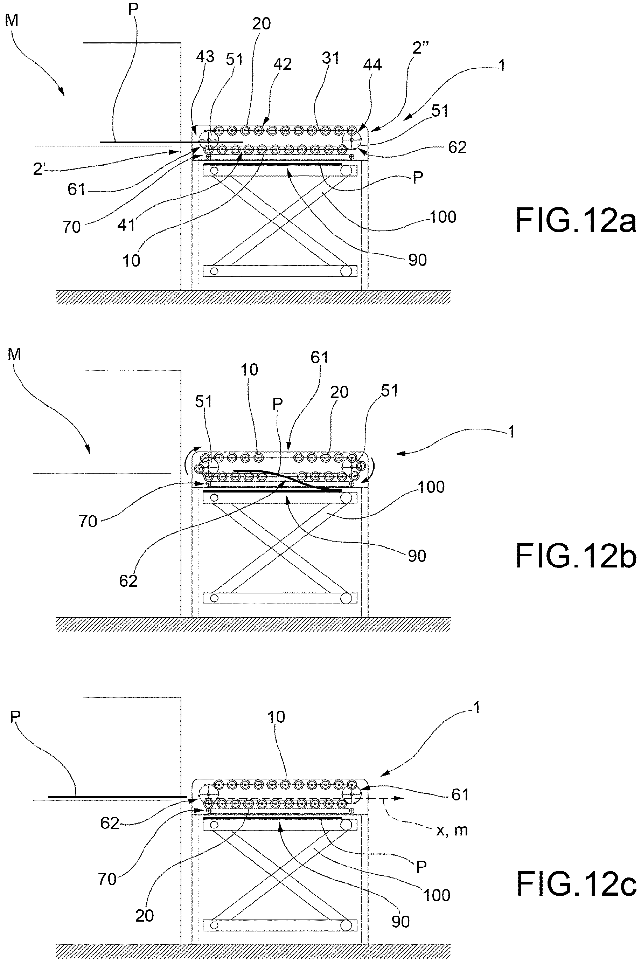

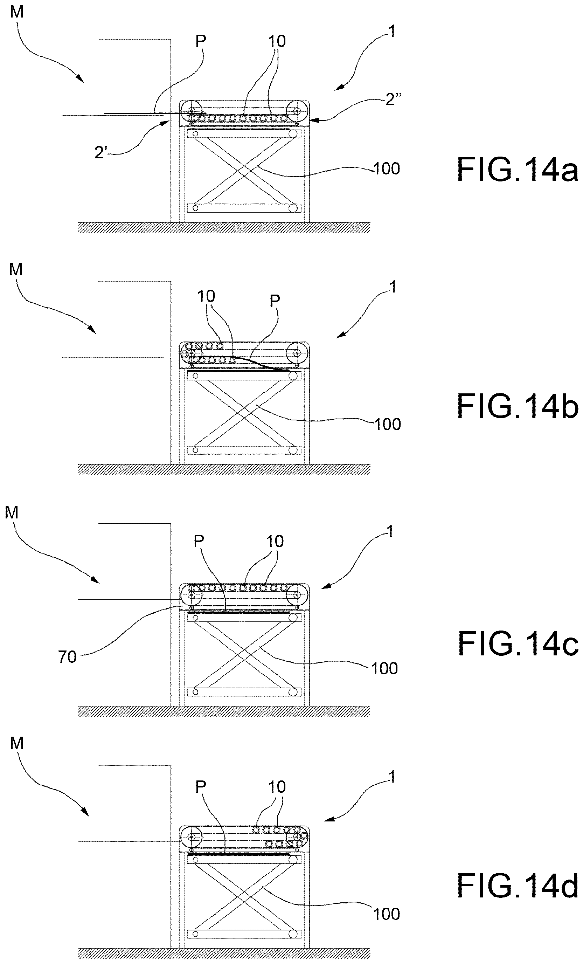

As shown schematically in Fig. 12a-c and 14a-d, the unloading roller conveyor 1 is intended to receive incoming processed pieces P from a plant M arranged upstream and to unload them onto a collection table 100 arranged beneath said conveyor.

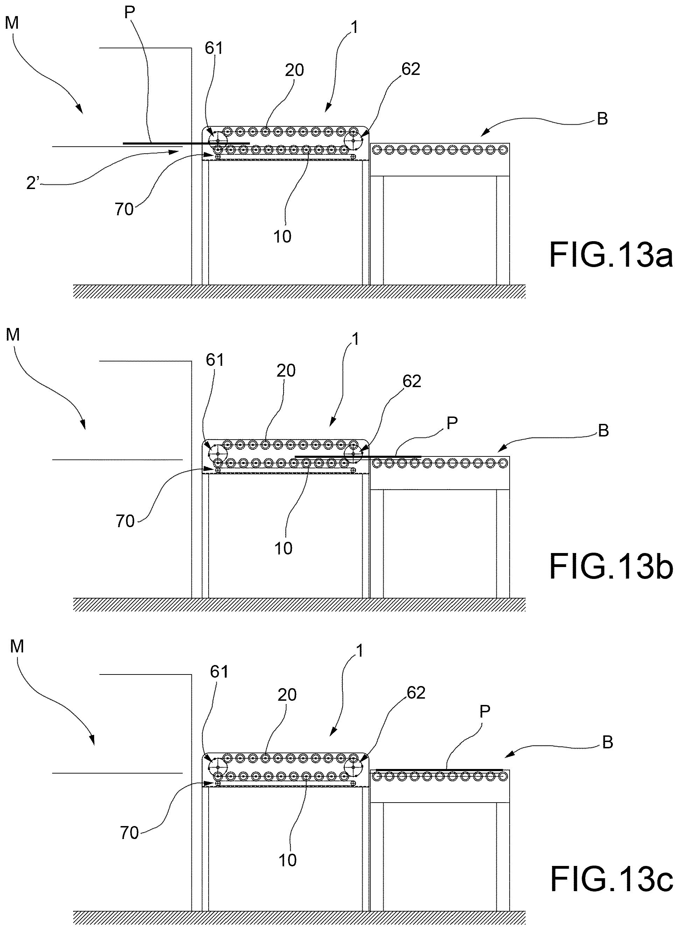

Advantageously, as illustrated in Fig. 13a-c, the unloading roller conveyor 1 can possibly also be used as a traditional roller conveyor in order to transfer the pieces leaving a plant M arranged upstream to a downstream location, for example another roller conveyor indicated by B in the drawings.

In accordance with a general embodiment of the invention, the unloading roller conveyor 1 comprises:
- a support structure 2 that extends between a first end 2' and a second end 2" in a longitudinal direction X of advancement of the pieces P into the conveyor 1; and
- at least one first series of rollers 10, which are rotationally supported at both the respective ends by said support structure 2.

The rollers 10 of said at least one first series have axes of rotation Y-Y that are parallel to one another and transverse to said longitudinal direction X, and can define a sliding and positioning plane m of the pieces inside said conveyor 1.

The above-mentioned sliding and positioning plane m of the pieces is arranged above a zone 90 for collecting the pieces, which is arranged below the conveyor 1 and at which a table 100 for collecting pieces P is intended to be arranged.

The height of the collection table 100 can preferably be adjusted automatically, for example by means of a pantograph adjustment system, as shown in the attached drawings.

The above-mentioned at least one first series of rollers 10 is movable with respect to the support structure 2 between:
- a piece supporting position, in which all said rollers 10 are arranged to form the sliding and positioning plane m, and
- a piece unloading position, in which all said rollers 10 are arranged above the sliding and positioning plane m such that the pieces (P) previously supported on this plane m by the first series of rollers 10 can pass into the collection zone 90.

As shown in Fig. 12b and 14b, during use, the passage of the rollers from the supporting position to the unloading position causes a progressive (and not sudden) removal of the rollers 10 from beneath the pieces P. This makes it possible to deposit the pieces P from the plane m onto the collection table 100 below in a controlled manner.

It should be noted that, in the piece unloading position, the rollers 10 are arranged above the sliding and positioning plane m. This means that the space arranged beneath the sliding and positioning plane m is not involved by the movement of the rollers (except for the space that is strictly necessary for the sliding and positioning of the rollers into the supporting position). The collection zone 90 can therefore extend up to a height that is just below the rollers, thereby significantly reducing the difference in height between the plane m and the collection table 100. The difference in height between the plane m and the table 100 can be particularly reduced since said rollers are not supported in a cantilever fashion above the collection zone 90, but are supported at both their opposite axial ends by the support structure 2. This prevents the need to form support structures in the collection zone, which would be positioned between the plane m and the collection table 100, thus inevitably increasing the difference in height between the plane m and the collection table 100.

In accordance with a particularly preferred embodiment of the invention shown in the attached drawings, the rollers 10 of said first series are each rotationally associated at their axial ends 10', 10" with a first 31 and a second 32 toothed belt or chain, respectively, which are, in turn, guided by said support structure 2 into positions that are transversally opposite one another, each position along a closed path 40.

More specifically, this closed path 40 comprises:
- a first section 41 that is substantially coplanar with said sliding and positioning plane m of the pieces P,
- a second section 42 that extends above said plane m; and
- two linking sections 43, 44 between said first and said second sections 41, 42.

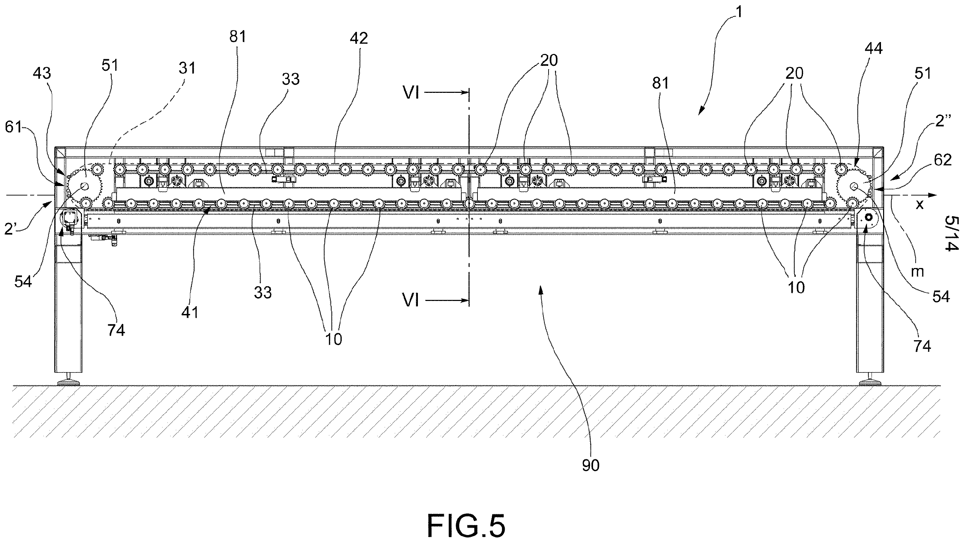

As illustrated in particular in Fig. 5, the above-mentioned two linking sections 43, 44 are arranged in proximity to the first end 2' and the second end 2", respectively, of the support structure 2.

The conveyor 1 comprises means 50 for moving the two toothed belts or chains 31, 32, which support the rollers 10 at their respective two axial ends, along said path 40 in a synchronized manner.

In terms of operation, as shown schematically in Fig. 12a-c and 14a-d, the above-mentioned rollers 10 are movable between said supporting position and said unloading position by the movement imparted on the two toothed chains or belts 31, 32 by the moving means 50.

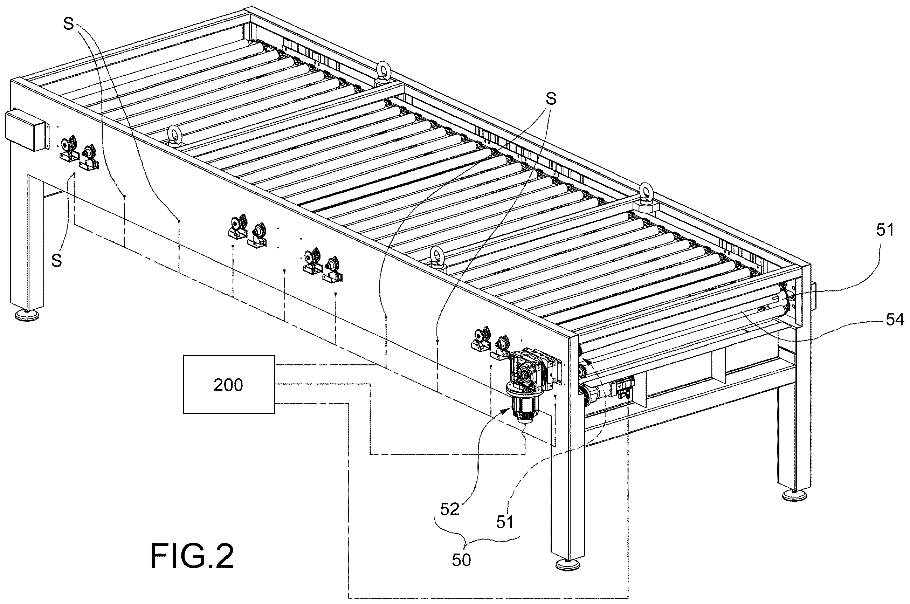

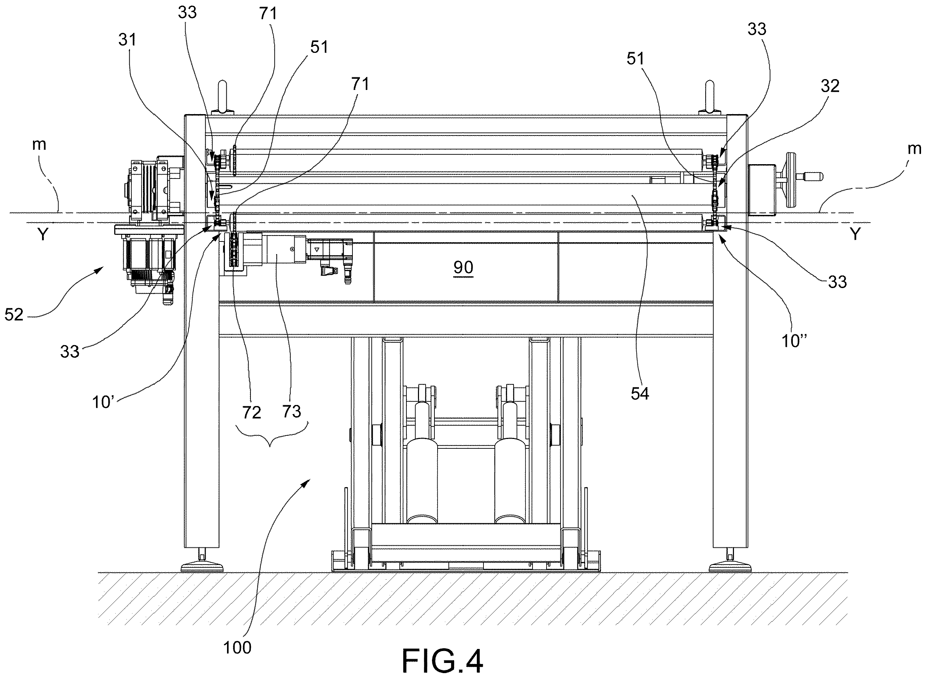

Preferably, as shown in the attached drawings, at each linking section 43, 44 of the path 40 of each toothed chain or belt 31, 32, the above-mentioned moving means 50 comprise a pinion 51. Therefore, at least two pinions 51 are provided for each chain or belt 31, 32 to give a total of at least four pinions 51. At least one of said pinions 51 is motorized, as shown for example in Figures 2 and 4, wherein an electric motor 52 is shown.

Preferably, the pinions 51 are made two by two mechanically integral in rotation by means of a transversal rotation shaft 54 for each pair of sprockets, so as to guarantee that the two toothed chains or belts 31, 32 move in synchronization with one another.

Preferably, as illustrated in particular in Fig. 5, the second section 42 of the path 40 of each toothed chain or belt 31, 32 (i.e. the section arranged above the plane m) is parallel to the first section 41 of said path, that is to the section that is substantially coplanar with the plane m. In particular, the first 41 and the second 42 sections of the path 40 are rectilinear and parallel to the plane m, while the two linking sections 43, 44 are semicircular since they are defined by the profile of the respective pinions 51.

Alternatively, the second section of the path may be - completely or at least partially - not parallel to the first section, since it may have a broken line profile, possibly comprising curved portions. The choice to have the second section parallel to the first, and therefore substantially rectilinear, makes it possible to simplify the support structure 2, rendering it more compact.

In terms of operation, the space that is created between the first 41 and the second 42 path defines the space inside which the pieces P are inserted inside the conveyor 1 during the receiving step. The space actually available for the passage of the pieces P is that comprised between the plane m and the transversal rotation shafts 54 which interconnect the pinions two by two.

In the preferred case of the second section being parallel to the first, both being rectilinear, the diameter of the pinions 51 defines the distance in height (orthogonally to the plane m) between the two sections 41 and 42 and the effectively usable space for the passage of the pieces P (substantially equivalent to the semidiameter of the pinion minus the semidiameter of the rollers).

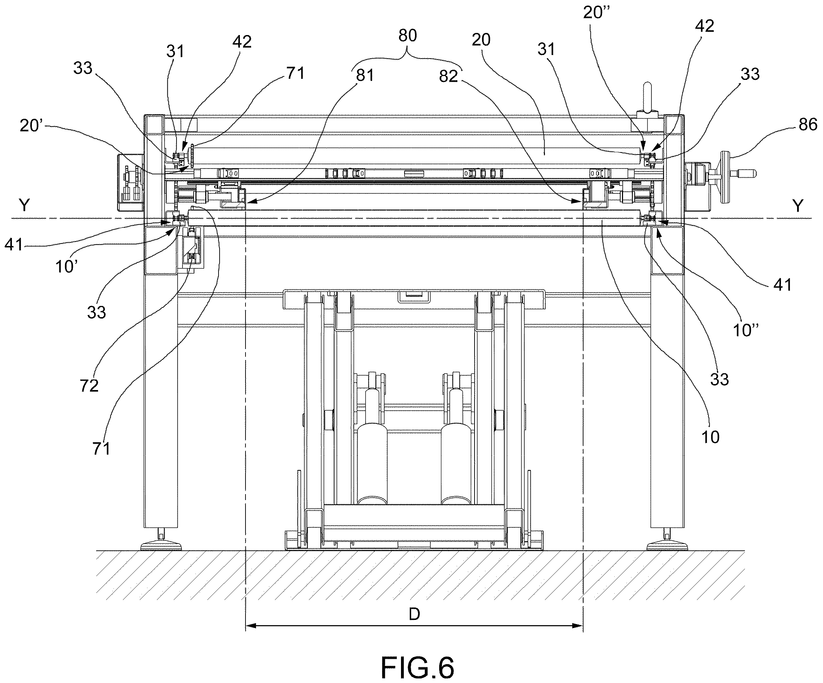

Preferably, as illustrated in Fig. 5, 6 and 7 in particular, each of said toothed chains or belts 31, 32 is guided by the support structure 2 by means of chain guides 33 at least at the first 41 and the second 42 sections of the path 40. Advantageously, the above-mentioned chain guides 33 are designed to unload the weight of the rollers 10 and of the pieces P that rest thereon onto the support structure 2. In particular, the guides 33 can each be associated with a bracket 34 that is fixed to the support structure 2.

In accordance with one embodiment shown schematically in Fig. 14a-d, the unloading conveyor 1 comprises just one series of rollers 10.

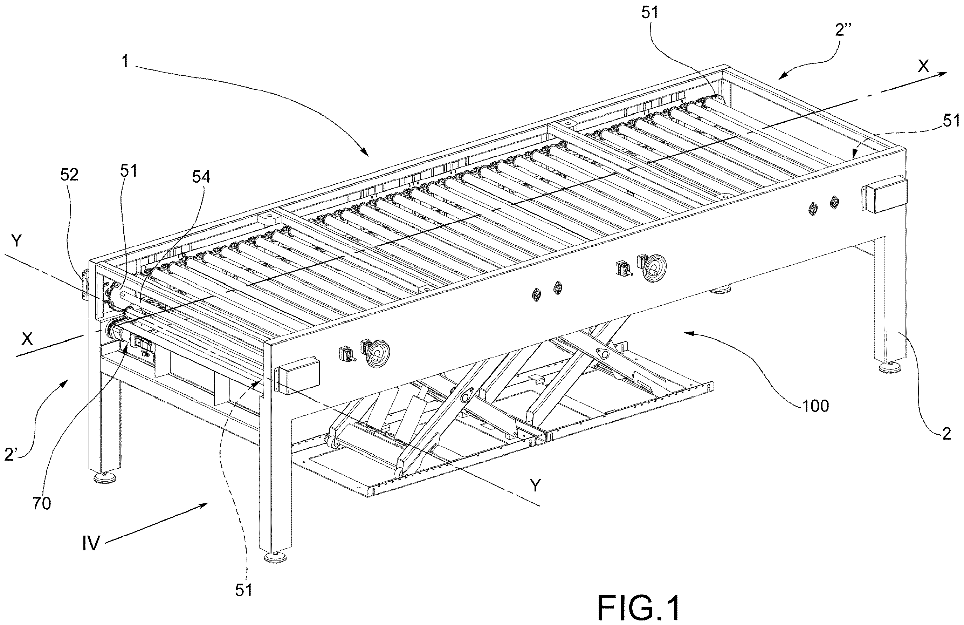

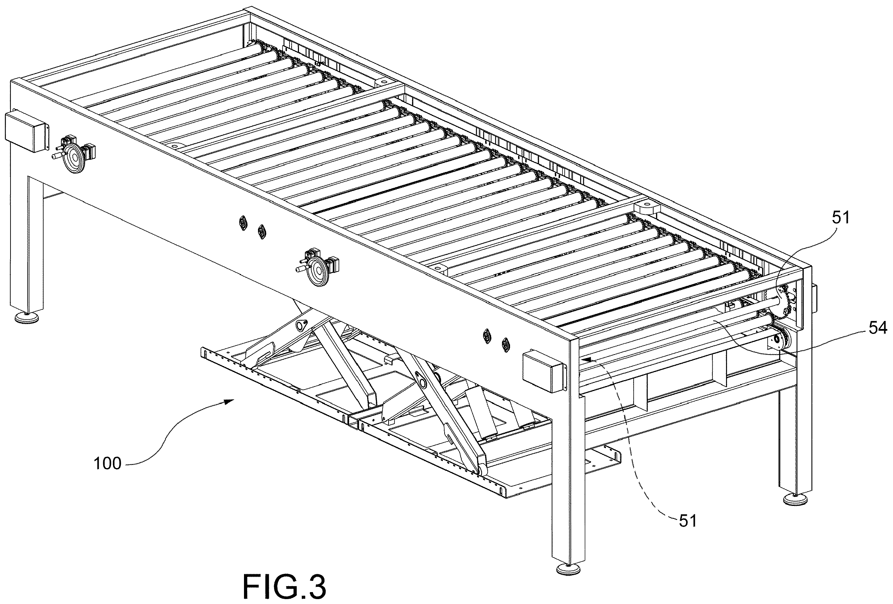

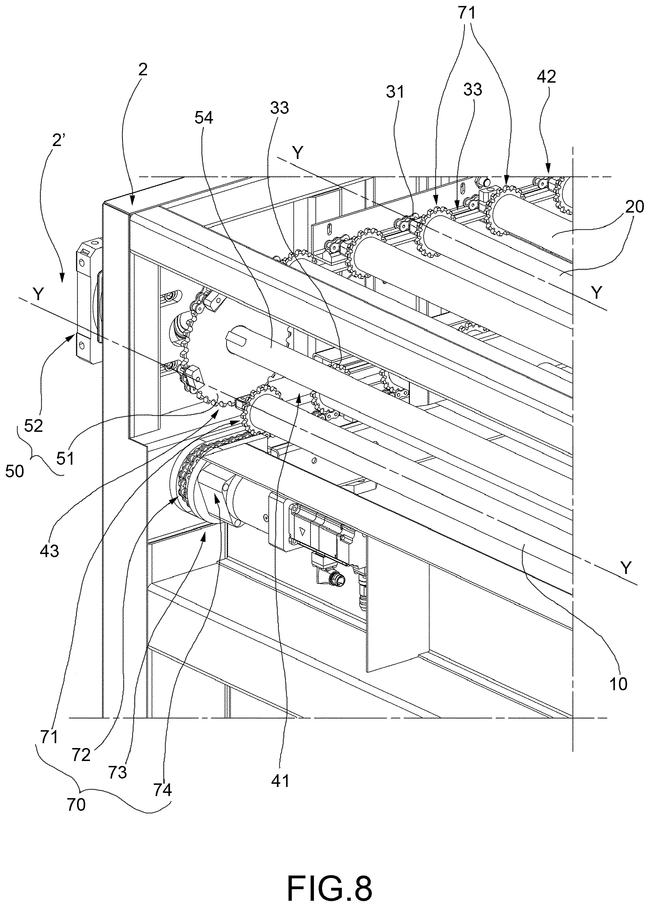

In accordance with a preferred embodiment shown in the attached figures 1 to 11, and in particular shown schematically in Fig. 12a-c, the unloading conveyor 1 comprises two separate series of rollers 10 and 20.

More specifically, in addition to the first series of rollers 10, the conveyor 1 may comprise a second series of rollers (20), which:
- are rotationally supported at both the respective ends 20' and 20" on said support structure 2;
- have axes of rotation Y-Y that are parallel to the axes of the rollers of said first series 10; and
- are suitable for being moved in a synchronized manner with said first series of rollers 10 such that (as illustrated in Fig. 12a-c), when the first series of rollers 10 is in said supporting position, the second series of rollers 20 is in said unloading position, and vice versa.

The first series of rollers 10 and the second series of rollers 20 are separated by two zones 61, 62 without rollers, each of which, when passing along said sliding and positioning plane m, defines a window for unloading the pieces P from said plane m towards the collection zone 90 below, as illustrated in Fig. 12b.

In terms of operation, when positioned at the first end 2' of the support structure, said two zones 61, 62 without rollers define the window via which the pieces P enter the conveyor, as illustrated in Fig. 12a and 12c.

In terms of operation, in case the conveyor 1 is used as a traditional roller conveyor, when positioned respectively at the first end 2' and the second end 2'' of the support structure, said two zones 61, 62 without rollers define respectively the window via which the pieces P enter the conveyor and the window via which the pieces P leave the conveyor 1, as illustrated in Fig. 13a-c.

In accordance with the preferred embodiment shown in the attached Fig. 1 to 11, the rollers of said second series 20 are rotationally associated at their two axial ends 20', 20" with the same two toothed chains or belts 31, 32, with which the rollers of said first series 10 are associated. The rollers of said first series (10) are separated from the rollers of said second series 20 along the two toothed chains or belts 31, 32 by said two zones 61, 62 without rollers.

In terms of operation, when there is just one series of rollers 10 (see Figures 14a-d), as already described above, the pieces P are deposited from the plane m onto the collection table 100 by progressively removing the rollers from beneath the pieces P. In this way, as illustrated in Fig. 12b, the pieces P - progressively deprived of the support of the rollers - bend towards the collection table 100, thus gently resting thereon.

In terms of operation, if there are two series of rollers 10 and 20 (see Fig. 12a-c), the pieces P are deposited from the plane m onto the collection table 100 in the same way. The deposition windows defined by the zones 61, 62 without rollers have to be large enough to allow the pieces to have a sufficient amount of space to bend and begin to lie down on the collection table before the rollers of the second series arrive, which are returning from the unloading position to the supporting position so as to replace the first series that are performing the opposite movement.

In terms of operation, the presence of two separate series of rollers makes it possible to reduce downtime during the passage from the step of unloading the pieces P to a new step of receiving new pieces P. In fact, when there are two series of rollers, just as one series is leaving the supporting position, it is replaced by the other series only with a time delay that is necessary for the deposition of the pieces from the plane m onto the table 100. Where there is just one series of rollers, it is instead necessary to wait until the series has completed its cycle (see Fig. 14a-d).

Preferably, the unloading conveyor 1 comprises:
- one or more sensors (indicated schematically by S in Fig. 2) that can detect the position of the pieces P and of the rollers 10, 20 in said longitudinal direction X inside the unloading conveyor 1; and
- an electronic unit for controlling the conveyor 1 (indicated schematically by 200 in Fig. 2) that is connected to said sensors S and to the means 50 for moving said rollers 10, 20.

More specifically, the above-mentioned electronic control unit 200 is programmed to adjust the longitudinal movement of the rollers 10, 20 such that:
- the rollers 10 and 20 are moved from the supporting position to the unloading position only when the pieces P are fully inserted in the conveyor 1 in order to avoid interference between rollers and pieces entering the conveyor 1; and
- in the step of pieces P being received into the conveyor 1, in order to avoid interference between rollers and pieces entering the conveyor 1:
   a) if one single series of rollers is provided, all the rollers 10, 20 are placed in the supporting position, and
   b) if two separate series of rollers are provided, all the rollers 10 of one series are placed in the supporting position and all the rollers 20 of the other series are placed in the unloading position.

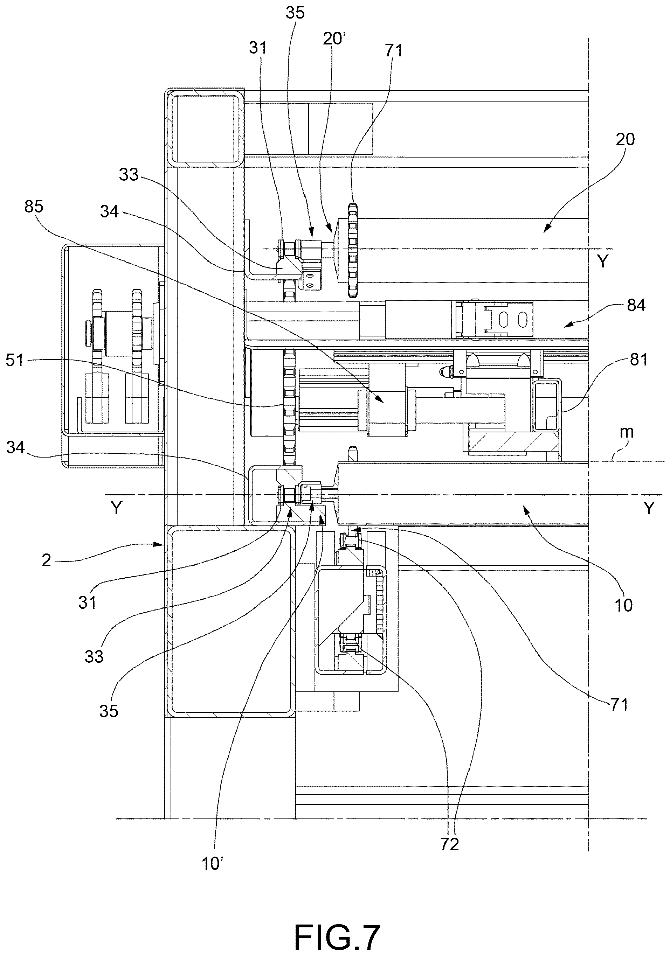

Advantageously, as illustrated in particular in Fig. 7, each roller 10, 20 is connected to the relative toothed chain or belt 31, 32 at each axial end thereof by means of a fixing element 35. Said fixing element is permanently fixed to the chain/belt and supports the roller 10, 20 such that it can rotate freely.

Advantageously, as illustrated in the attached drawings, the conveyor 1 comprises motor means 70 suitable for rotating in a synchronized manner around their own axes the rollers of said first series 10, and possibly also the rollers of said second series 20, if provided.

Preferably, the above-mentioned motor means 70 are suitable to make to rotate around their own axes only the rollers that are in the supporting position.

In accordance with the embodiment shown in Figures 1 to 11, each of said rollers 10, 20 is provided - near to an axial end 10', 20' thereof - with a cogwheel 71 rotating jointly with it.

The above-mentioned motor means 70 comprise a toothed chain or belt transmission system 72 that is arranged beneath said plane m and is suitable to engage with the cogwheels 71 of the rollers 10, 20 that are placed in said supporting position so as to make them rotate around their own axes in a synchronized manner.

More specifically, the toothed chain or belt transmission system 72 substantially extends over the entire length of the conveyor 1 and comprises two pinions 74, one of which is arranged at the first end 2' and the other at the second end 2'' of said support structure, respectively. One of said two pinions 74 is connected to a motor 73, preferably an electric motor.

Advantageously, as shown schematically in Fig. 2, said electronic control unit is connected to said motor means 70 and is programmed to activate such motor means 70 and to therefore make the rollers 10, 20 to rotate around themselves:
- in the step of pieces P being received into the conveyor 1 (when one series of rollers 10 or 20 is placed in the supporting position) in order to guide the longitudinal positioning of the pieces P on the rollers placed in the supporting position in a controlled manner; and/or
- in the step of unloading the pieces P from the plane m to the collection zone 90 (when the rollers 10 or 20 are progressively removed from below the pieces passing from the supporting position to the unloading position) in order to impart a relative movement to the pieces in the direction opposite the movement of the rollers, thereby preventing the pieces from being dragged in the longitudinal direction by the rollers.

In this last case (step of unloading the pieces P), the function carried out by the motor means 70 can alternatively be carried out by means (not shown) suitable to hold the pieces in position. In this case, the rollers can be left to idle.

Advantageously the conveyor 1 comprises a system of lateral guides 80 that is associated with said support structure 2 in the zone for receiving the pieces P.

Such lateral guides 80 are suitable to guide and position the pieces P within said unloading conveyor 1 along the longitudinal direction X in proximity to the sliding and positioning plane m.

In accordance with the preferred embodiment shown in the attached drawings, the above-mentioned system of lateral guides 80 comprises at least two plates 81, 82 that are opposite in transversal direction at distance D one from the other and are placed so as to be parallel to one another and to said longitudinal direction X. The transversal position of said at least two plates 81, 82 is adjustable in such a way to vary said distance D.

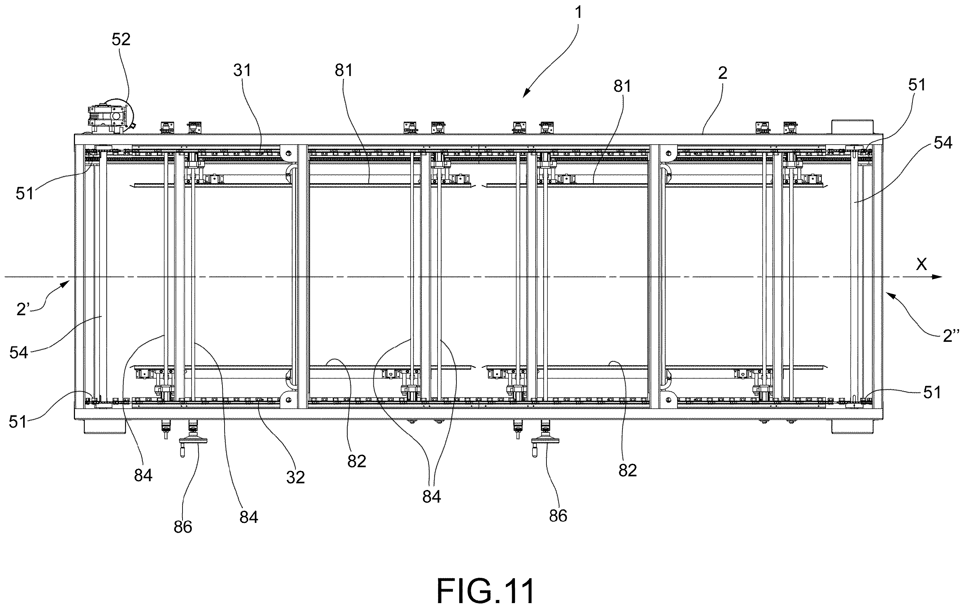

In particular, the opposite plates 81, 82 can be connected to one another by a plurality of threaded rods by a kinematic mechanism comprising an assembly of threaded rods 84, which are connected to one another by a chain transmission system (not shown) and can be actuated so as to adjust the mutual position of the two plates 81, 82 in a coordinated manner. The system can be actuated manually by means of handwheels 86 connected to one of said rods 83 (as illustrated in the attached drawings), or can be automated. In particular, depending on the length of the conveyor 1, the system of lateral guides can be divided into two or more parts, as shown in Fig. 11.

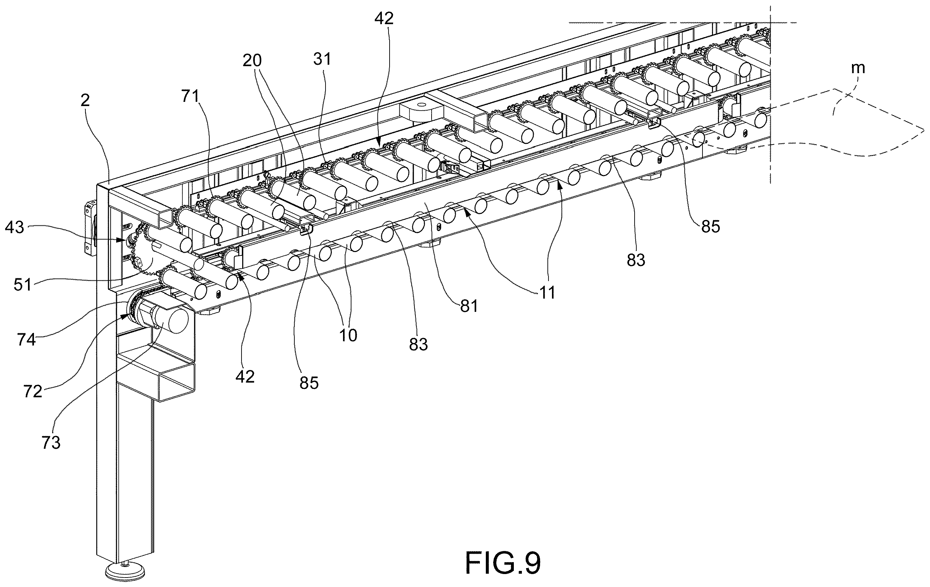

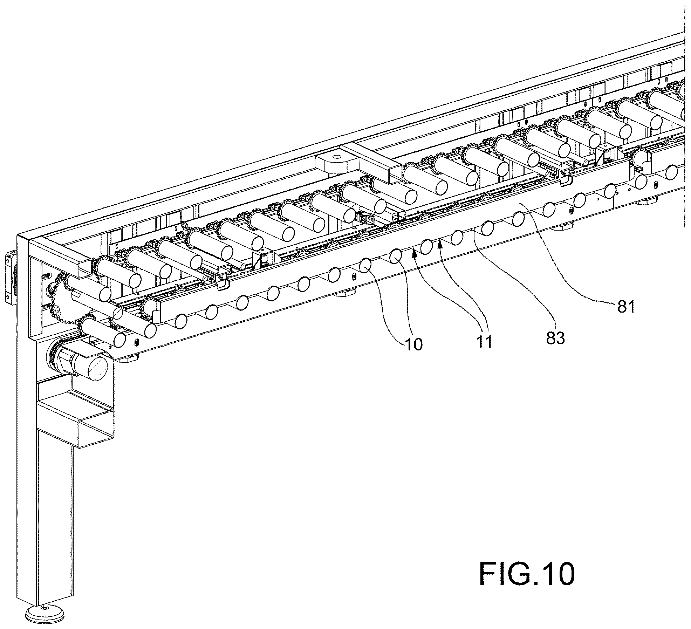

Advantageously, each of said at least two plates 81, 82 comprises a profiled longitudinal edge 83 suitable for closing the longitudinal gaps 11 between the rollers 10, 20 that are placed in said supporting position. The conveyor 1 comprises means 85 (for example a pneumatic cylinder) for moving each of said at least two plates 81, 82 orthogonally with respect to said plane m between:
- a raised position, in which said plates 81, 82 are raised with respect to the rollers 10 or 20 so as not to impede their movement in the longitudinal direction X (Fig. 9), and
- a lowered position, in which said plates 81, 82 are lowered on the rollers 10 or 20 in order to close the respective longitudinal gaps 11 when said rollers 10 or 20 are longitudinally stationary in said supporting position (Fig. 10).

Advantageously, the above-mentioned electronic control unit is connected to said means 85 for moving each of said at least two plates 81, 82 orthogonally to said plane m, and is programmed to activate said means 85 for moving the plates in function of the position and the movements of the rollers so as to prevent the plates from interfering with the rollers when they are moved into the lowered position.

The invention makes it possible to achieve numerous advantages, some of which have already been described.

The unloading roller conveyor according to the invention makes it possible to transfer the pieces from the roller plane for receiving the pieces to a table for collecting the pieces arranged beneath said conveyor in a controlled manner, without the need to use a robot manipulator, thereby preventing the pieces from being subjected to impacts that could damage them.

The unloading roller conveyor according to the invention is simple and economic to produce, as can be seen from the description of one or more specific embodiments.

The unloading roller conveyor according to the invention is also simple to operate and easy to control, as described above.

The invention designed in this way therefore achieves the predetermined objects.

Of course, when practically implemented, it may also assume embodiments and configurations that are different from that described above, without thereby departing from the present scope of protection.

Furthermore, all the details can be replaced by technically equivalent elements, and any dimensions, shapes and materials can be used, according to requirements.

## Claims

1. Unloading roller conveyor (1), destined to receive incoming machined pieces (P) from a plant situated upstream and to unload them onto a collecting table (100) placed below it, said conveyor (1) comprising:
- a support structure (2) which extends between a first end (2') and a second end (2") along a longitudinal direction (X) of advancement of the pieces within the conveyor (1);
- at least one first series of rollers (10), which are rotationally supported at both respective ends by said support structure (2), have axes of rotation (Y-Y) mutually parallel and transversal to said longitudinal direction (X) and are suitable to define a horizontal plane (m) of sliding and positioning of the pieces within said conveyor (1), said horizontal plane (m) being placed above a zone of collection (90) of the pieces placed below said conveyor (1), in correspondence to which a table of pieces collection (100) is destined to be placed;
**characterised by** the fact that said at least one first series of rollers (10) is movable with regard to said support structure (2) between:
- a pieces supporting position, in which all said rollers (10) are placed to form said horizontal plane (m) of sliding and positioning, and
- a pieces unloading position, in which all said rollers (10) are placed above said horizontal plane (m) of sliding and positioning in such a way that the pieces (P) previously supported on said horizontal plane (m) by said first series of rollers (10) may pass to said collection zone (90), in use the passage from said supporting position to said unloading position determining a progressive removal of the rollers (10) from beneath the pieces (P) which permits a controlled deposition of the pieces (P) from said horizontal plane (m) to the collection table below (100).

2. Conveyor according to claim 1, wherein the rollers (10) of said first series are each rotationally associated with its own axial ends (10', 10") respectively with a first (31) and with a second toothed belt or chain (32), which are guided by said support structure (2) in position transversally opposite, each along a closed path (40) which comprises:
- a first section (41) substantially coplanar with said horizontal plane (m) of sliding and positioning of the pieces (P),
- a second section (42) which extends above said horizontal plane (m); and
- two linking sections (43, 44) between said first and said second section (41, 42), said two linking sections (43, 44) being placed respectively in proximity to said first end (2') and to said second end (2"),
and wherein said conveyor (1) comprises means (50) for moving along said path (40) in a synchronized manner the two toothed belts or chains (31, 32) which support the rollers (10) at their respective two axial ends, said rollers (10) being moveable between said supporting position and said unloading position by the movement exerted on said two toothed chains or belts (31, 32) by said means for moving (50).

3. Conveyor according to claim 2, wherein in correspondence with each linking section (43, 44) of the path (40) of each toothed chain or belt (31, 32) said means for moving (50) comprise a pinion (51), wherein at least one of said pinions (51) is motorized, the pinions (51) being preferably mechanically integral two by two in rotation in such a way as to guarantee a reciprocally synchronized movement of the two toothed chains or belts (31, 32).

4. Conveyor according to claim 2 or 3, wherein the second section (42) of said path is parallel to said first section (41).

5. Conveyor according to claim 2, 3 or 4, wherein each of said toothed chains or belts (31, 32) is guided by said support structure (2) by means of chain guides (33) at least in correspondence to said first (41) and second section (42) of the path, wherein said chain guides (33) are configured for unloading on the support structure (2) the weight of the rollers (10) and of the pieces (P) placed thereon.

6. Conveyor according to one or more of the previous claims, comprising a second series of rollers (20), which are rotationally supported at both their respective ends on said support structure (2), have axes of rotation (Y-Y) parallel to those of the rollers of said first series (10) and are suitable for being moved in a synchronized manner with said first series of rollers (10), in such a way that, when the first series of rollers (10) is in said supporting position, the second series of rollers (20) is in said unloading position, wherein said first series of rollers (10) and said second series of rollers (20) are separated by two zones without rollers (61, 62), each of which, when passing along said horizontal plane (m) of sliding and positioning, defines a window for unloading the pieces (P) from said horizontal plane (m) to the collection zone below (90).

7. Conveyor according to claims from 2 to 5 and claim 6, wherein the rollers of said second series (20) are rotationally associated at their two axial ends with the same two toothed chains or belts (31, 32) to which the rollers of said first series (10) are associated, and wherein the rollers of said first series (10) are separated from the rollers of said second series (20) along the two toothed chains or belts (31, 32) by said two zones without rollers (61, 62).

8. Conveyor according to one or more of the previous claims, comprising: - one or more sensors suitable for detecting the position of the pieces (P) and of the rollers (10, 20) along said longitudinal direction (X) within said unloading conveyor (1); and - an electronic control unit for said conveyor (1) which is connected to said sensors and to the means for moving said rollers (10, 20) and is programmed to regulate the longitudinal movement of the rollers (10, 20) in such a way that:
- the rollers (10; 20) are moved from the supporting position to the unloading position only when the pieces (P) are fully inserted into the conveyor (1) to avoid interference between rollers and the pieces incoming to the conveyor (1); and
- in the step of pieces (P) being received into the conveyor (1), if one single series of rollers is provided, all the rollers (10, 20) are placed in the supporting position, and, if two distinct series of rollers are provided, all the rollers (10) of a series are placed in the supporting position and all the rollers (20) of the other series are placed in the unloading position, to avoid interference between rollers and the pieces incoming to the conveyor (1).

9. Conveyor according to one or more of the previous claims, comprising motor means (70) suitable for rotating in a synchronized manner around their own axes the rollers of said first series (10), and possibly also the rollers of said second series (20), if provided, wherein preferably said motor means (70) are suitable for rotating around their own axes only those rollers which are in said supporting position.

10. Conveyor according to claim 9, wherein each of said rollers (10, 20) is equipped - in proximity to one of its axial ends (10', 20') - with a cogwheel (71) rotating jointly with it and wherein said motor means (70) comprise a toothed chain or belt transmission system (72) which is placed beneath said horizontal plane (m) and is suitable to engage the cogwheels (71) of the rollers (10, 20) which are in said supporting position in such a way as to make them to rotate in a synchronized manner around their own axes.

11. Conveyor according to claim 8 and claim 9 or 10, wherein said electronic control unit is connected to said motor means (70) and is programmed to activate said motor means (70) and to make the rollers (10, 20) to rotate around their own axes:
- in the step of pieces (P) being received into the conveyor (1), to guide in a controlled manner the longitudinal positioning of the pieces (P) on the rollers placed in the supporting position; and/or
- in the step of unloading the pieces (P) from horizontal plane (m) to the collection zone (90), when the rollers (10, 20) are progressively removed from beneath the pieces, passing from the support to the unloading position, to impose a movement to the pieces opposite to that of the rollers, preventing the pieces from being dragged in a longitudinal direction by the rollers.

12. Conveyor according to one or more of the previous claims, comprising a system of lateral guides (80) which is associated with said support structure (2), said lateral guides (80) being suitable for guiding and positioning the pieces (P) within the said unloading conveyor (1) along said longitudinal direction (X) in proximity to said horizontal plane (m) of sliding and positioning.

13. Conveyor according to claim 12, wherein said system of lateral guides (80) comprises at least two plates (81, 82) which are opposite in transversal direction at distance (D) one from the other and are placed in such a way as to be parallel to each other and to said longitudinal direction (X), and wherein the transversal position of said at least two plates (81, 82) is adjustable in such a way as to vary said distance (D).

14. Conveyor according to claim 13, wherein each one of said at least two plates (81, 82) has a profiled longitudinal edge (83) suitable for closing the longitudinal gaps between the rollers (10, 20) which are in said supporting position and wherein said conveyor (1) comprises means (85) for moving each one of said at least two plates (81, 82) orthogonally to said horizontal plane (m) between a raised position, in which said plates (81, 82) are raised in relation to the rollers (10, 20) to avoid impeding their movement in a longitudinal direction (X), and a lowered position in which said plates (81, 82) are lowered on the rollers to close the respective longitudinal gaps, when said rollers (10, 20) are longitudinally stationary in said supporting position.

15. Conveyor according to claim 8 or 10 and claim 14, wherein said electronic control unit is connected to said means (85) for moving each of said at least two plates (81, 82) orthogonally to said horizontal plane (m) and is programmed to activate said means (85) of moving the plates in function of the position and the movements of the rollers to prevent the plates from interfering with the rollers when they are moved to the lowered position.
